# EUROPÄISCHE PATENTSCHRIFT

(11) **EP 2 590 716 B1**
(45) Veröffentlichungstag und Bekanntmachung des Hinweises auf die Patenterteilung: **27.06.2018**
(21) Anmeldenummer: 11724380.8
(22) Anmeldetag: 12.05.2011
(51) Int. Cl.: A62B 1/08, A63B 29/00, A62B 27/00, A62B 1/14, A62B 35/00, E04G 21/32, E06C 7/18, F16D 59/00

(54) **VORRICHTUNG UND VERFAHREN ZUR AUFSTIEGSSICHERUNG**
DEVICE AND METHOD FOR PROTECTION DURING ASCENT
DISPOSITIF ET PROCÉDÉ DE SÉCURISATION D'ASCENSION

(30) Priorität: 09.07.2010 DE 102010031208
(43) Veröffentlichungstag der Anmeldung: 15.05.2013
(73) Patentinhaber: Böttcher, Andrea, 08289 Schneeberg (DE)
(72) Erfinder: BAUM, Christoph, 56068 Koblenz (DE)
(74) Vertreter: Buchenau, Thomas
(86) Internationale Anmeldenummer: PCT/EP2011/057731
(87) Internationale Veröffentlichungsnummer: WO 2012/004033

(56) Entgegenhaltungen:
- EP-A1- 0 577 587
- DE-A1- 3 905 476
- DE-U1- 29 915 360

## Beschreibung

Die Erfindung betrifft eine Vorrichtung sowie ein Verfahren zur Aufstiegssicherung, insbesondere zum Besteigen von Strommasten, Bäumen oder sonstigen hohen Strukturen.

Aus der Praxis sind eine Vielzahl von Vorrichtungen zur Aufstiegssicherung bekannt. Zum Einsatz kommen insbesondere mitlaufende Aufstiegssicherungen. Diese kommen regelmäßig zusammen mit bereits vorhandenen festen Seilen oder sonstigen Strukturen (z.B. C-Profilen von Leitern etc.) zur Anwendung. Mitlaufende Aufstiegssicherungen sind mit dem festen Seil oder C-Profil verbunden und werden von der aufsteigenden Person mit nach oben bewegt. Der Abstand zwischen einer mitlaufenden Aufstiegssicherung und der aufsteigenden Person ist daher stets relativ gering, in den meisten Fällen kleiner als 50 Zentimeter. Dementsprechend ist auch das Seil, das von der Aufstiegssicherung zur aufsteigenden Person führt, üblicherweise in seiner Länge begrenzt und integraler Bestandteil der Vorrichtung. Mitlaufende Aufstiegssicherungen sind beispielsweise aus EP 1 671 009 B1, DE 203 14 230 U1, DE 20 2008 010 851 U1, DE 40 19 319 A1, WO 99/55425, DE 7 103 612, DE 20 2006 010 819 U1, DE 203 06 119 U1, DE 20 2006 002 559 U1 und DE 20 2009 014 714 U1 bekannt. Nachteilig an den mitlaufenden Aufstiegssicherungen ist, dass stets eine vorhandene Infrastruktur (vormontiertes Seil, Gleitschiene etc.) benötigt wird, um die Aufstiegssicherung verwenden zu können. Die vorhandene Infrastruktur muss regelmäßig gewartet werden, was zeit- und kostenintensiv ist.

Alternativ zu den mitlaufenden Aufstiegssicherungen werden bei der Besteigung hoher Strukturen aus dem Bergsport bekannte Sicherungstechniken angewendet, insbesondere die so genannte Vorstiegssicherung. Bei der Vorstiegssicherung ist die aufsteigende Person mit einem Seilende verbunden und führt das Seil mit nach oben. Die aufsteigende Person legt das Seil in regelmäßigen Abständen um Zwischensicherungen, um im Falle eines Absturzes die Sturzhöhe zu begrenzen. Für die Besteigung von Strommasten und sonstigen Masten und Strukturen wurden als Zwischensicherungen die in EP 577 587 B1 beschriebenen Sicherheitssteigsprossen entwickelt. Am Fuße der zu besteigenden Struktur (unten) steht eine zweite Person zur Sicherung der aufsteigenden Person. Nachteilig an der Vorstiegssicherung ist, dass stets zwei Personen benötigt werden, um eine Struktur sicher zu besteigen. Ferner ist die volle Konzentration der sichernden Person erforderlich. Bei Unachtsamkeit oder Anwendungsfehlern besteht das Risiko, dass die aufsteigende Person trotz Vorstiegssicherung abstürzt und sich verletzt.

Aus DE 39 05 476 A1 ist eine Rotationsbügelseilbremse für Bergsteiger bekannt, die zwar als mitlaufende Aufstiegssicherung und als Vorstiegssicherung verwendbar sein soll. Es ist jedoch nicht ersichtlich, wie diese Rotationsbügelseilbremse am Fuße eines Standplatzes, insbesondere an einem Strommasten sicher fixiert werden soll.

Eine weitere Aufstiegsmöglichkeit ist der Aufstieg mit zwei Verbindungsmitteln inklusive Karabinerhaken. Der Anwender führt beim Auf- oder Abstieg wechselseitig Karabinerhaken um die Streben der zu besteigenden Struktur, die in der Höhe versetzt eingehängt werden. Somit kann er lückenlos gesichert aufsteigen. Der Nachteil dieser Methode ist, dass die Karabiner zum Einhängen an die Struktur, je nach Stärke des vorhandenen Profils, sehr große Dimensionen haben und entsprechend umständlich in der Anwendung sind. Dieser Umstand ungünstiger Steigergonomie führt gerade zur Ermüdung des Kletternden und durch die ungünstige Körperhaltung auch häufig zum Sturz. Zudem werden gerade bei Stahlgittermastkonstruktionen die Karabinerhaken bei Einleiten der Last häufig in einer nicht den Normprüfungen für Karabiner entsprechenden Position belastet. Der Aufbau der diagonal verlaufenden Streben an Stahlgittermasten führt unter Umständen zum Verkanten des Karabiners, was zu einer unbeabsichtigten Öffnung der Verriegelungsmechanik bis hin zum Bruch des Karabiners und Absturz des Anwenders führen kann. Nachteilig an dieser Methode ist auch, dass die Rettung des Gestürzten und an der Struktur Hängenden, immer einen Aufstieg des Retters zum Verunfallten verlangt.

Neben den vorstehend beschriebenen Aufstiegssicherungen gibt es Höhensicherungsgeräte, die am höchsten Punkt einer zu besteigenden Struktur angeordnet werden und dann im Fall eines Absturzes das Seil, an dem die zu sichernde Person hängt, blockieren. Diese Vorrichtungen haben den Nachteil, dass diese nur verwendbar sind, wenn sie bereits vorinstalliert sind und wenn die Möglichkeit besteht, vor dem Aufstieg ein Seil durch diese hindurch zu führen. Die Installation eines Höhensicherungsgeräts erfordert entweder das ungesicherte Aufsteigen einer anderen Person oder die Verwendung von Hilfsmitteln, wie z.B. einem Kran, Helikopter etc. Höhensicherungsgeräte sind daher nicht für den unkomplizierten und sicheren Erstaufstieg auf eine Struktur geeignet. Sind Höhensicherungsgeräte vorinstalliert, müssen diese regelmäßig gewartet werden, was insbesondere bei sehr hohen Strukturen zeit- und kostenintensiv ist.

Der Erfindung liegt die Aufgabe zugrunde, eine Vorrichtung und ein Verfahren zur Verfügung zu stellen, die es einer einzelnen Person ermöglichen, eine hohe Struktur, insbesondere einen Strommasten, ohne vorinstallierte Sicherungsgeräte sicher und ohne fremde Hilfe zu besteigen. Die übrigen vorstehend beschriebenen Nachteile der anderen Methoden sollen dabei vermieden werden.

Die Lösung der Aufgabe erfolgt erfindungsgemäß mit den Merkmalen der Ansprüche 1 bzw. 14.

Eine erfindungsgemäße Vorrichtung zur Aufstiegssicherung einer aufsteigenden Person mit einem von der aufsteigenden Person mitzuführenden losen Seil umfasst die Merkmale des Anspruches 1. Die erfindungsgemäße Vorrichtung hat den Vorteil, dass mit dieser ein Aufstieg gemäß dem erfindungsgemäßen Verfahren möglich wird, welches die Verfahrensschritte des Anspruches 14 umfasst. Die erfindungsgemäße Vorrichtung und das erfindungsgemäße Verfahren haben den Vorteil, dass eine Person eine hohe Struktur ohne fremde Hilfe sicher besteigen kann. Im Falle eines Absturzes bewirkt der Mechanismus der erfindungsgemäßen Vorrichtung, dass das Seil blockiert und durch die erfindungsgemäße Vorrichtung gehalten wird. Insbesondere können mit nur einer erfindungsgemäßen Vorrichtung mehrere Strukturen hintereinander bestiegen werden, da die Vorrichtung von ihren Abmaßen kompakt und transportabel ist und die Vorrichtung für den Aufstieg am Fuße einer zu besteigenden Struktur fixiert werden kann. Es ist für die Besteigung einer hohen Struktur weder erforderlich, wartungsintensive, vorinstallierte Vorrichtungen zu verwenden. Noch wird bei Verwendung der erfindungsgemäßen Vorrichtung eine zweite Person für den sicheren Aufstieg benötigt. Die erfindungsgemäße Vorrichtung ermöglicht ferner ein Ablassen einer frei hängenden Person am Fuße der bestiegenen Struktur (von unten). Es ist daher nicht erforderlich, dass eine zweite Person zur Rettung einer gestürzten Person ebenfalls aufsteigt. Dies verkürzt die Rettungszeit erheblich.

Als Haltemittel im Sinne der Erfindung sind sowohl an der Vorrichtung vorgesehene Durchgangsöffnungen als auch an der Vorrichtung angeordnete Halteelemente wie zum Beispiel Halteringe, Winkelelemente, Spannelemente, Öffnungen zur Aufnahme von Haltestrukturen oder sonstige Elemente zu verstehen, die es ermöglichen, die erfindungsgemäße Vorrichtung an einem festen Verankerungspunkt, beispielsweise an einem Strommasten, einer Leiter etc. zu fixieren. Elemente mit Durchgangsöffnungen ermöglichen es insbesondere, Ketten, Seile und andere Fixiermittel zu verwenden, um die Vorrichtung in ihrer Lage zu fixieren.

Unter einer konstruktiven Gestaltung, die es ermöglicht, das Seil von unten in die in der vorgegebenen Position fixierte Vorrichtung einzuführen, ist zu verstehen, dass die erfindungsgemäße Vorrichtung beispielsweise eine Öffnung aufweist, die es ermöglicht, ein Seil von unten in die Vorrichtung einzuführen und um die erste Umlenkung zu legen, ohne dass das Seil an Gehäusekanten oder sonstige Elemente des Gehäuses anstößt, die bei Bewegung des Seils eine ungewünschte Reibung verursachen würden. Vorzugsweise kann das Seil von unten ohne direkten Kontakt mit der Vorrichtung zur ersten Umlenkung geführt werden, so dass ein am Boden befindliches, aufgewickeltes langes Seil ohne fremde Hilfe vom Boden nach oben durch die Vorrichtung gezogen werden kann.

Bei dem Seil handelt es sich vorzugsweise um ein Seil, welches auch den Seilen entspricht, die bei der Seilzugangs- und Positionierungstechnik verwendet werden. Diese entsprechen gültigen Normen und sind halbstatisch. Alternativ sieht eine weitere Form der erfindungsgemäßen Vorrichtung den Einsatz dynamischer Kletterseile vor. Es handelt sich bei beiden Seilvarianten vorzugsweise um Seile mit einem Durchmesser von 9-13 mm, vorzugsweise 9 mm, 11 mm und 12 mm. Vorzugsweise wird die Vorrichtung mit Seilen in Signalfarben wie rot, orange oder gelb verwendet.

Das Seil kann bei einer weniger bevorzugten Ausführungsform auch von der Seite oder von oben in die Vorrichtung eingeführt werden, wenn sichergestellt ist, dass ausreichend Seil aus dieser Richtung zugeführt werden kann und auch bei Erschlaffen des Seiles nicht die Gefahr besteht, dass das Seil sich in der Vorrichtung verkantet. Dies kann beispielsweise dadurch erfolgen, dass das Seil über zwei Rollen seitlich oder von oben in die Vorrichtung eingeführt wird, wobei die Rollen einen Abstand aufweisen, der ungefähr dem Durchmesser des Seiles entspricht (Abweichung zum Durchmesser des Seils: -10% bis + 20%, vorzugsweise 0% bis 15%).

Unter einer Umlenkung im Sinne der Erfindung ist insbesondere ein drehbar gelagertes Element (z.B. eine Seilrolle) zu verstehen, das es ermöglicht, ein Seil reibungsarm um dieses herumzuführen. Eine solche Seilrolle ist vorzugsweise im Querschnitt so gestaltet, dass sie in der Mitte eine Vertiefung zur Führung des Seils aufweist, welche einem Auswandern des Seils zu den Seiten entgegenwirkt.

Als Mechanismus, der eine automatische Blockierung des Seils bewirkt, wenn die Geschwindigkeit des Seils durch die Vorrichtung einen vorgegebenen Grenzwert überschreitet, kann insbesondere ein fliehkraftgesteuertes Blockierelement verwendet werden. Derartige fliehkraftgesteuerte Blockierelemente sind aus dem technischen Gebiet der Aufstiegssicherungen bzw. Höhensicherungen bekannt. Beispielsweise kann als solcher Mechanismus ein Mechanismus eines bekannten Höhensicherungsgerätes eingesetzt werden. Selbstverständlich kann statt einer Fliehkraftbremse auch ein sonstiger Mechanismus eingesetzt werden, der eine automatische Blockierung des Seils bei Überschreitung einer vorgegebenen Seilgeschwindigkeit bewirkt. Möglich ist es insbesondere auch, die Seilgeschwindigkeit elektronisch zu erfassen und eine Blockierung durch einen Motor oder eine entsprechende Mechanik hervorzurufen.

In Bezug auf die zweite Umlenkung ist für die Erfindung analog zur ersten Umlenkung wichtig, dass das aus der Vorrichtung austretende Seil in Aufstiegsrichtung aus der Vorrichtung herausführbar ist, ohne dass das Seil beim Durchlaufen der Vorrichtung aufgrund einer Reibung an einer Kante oder einem kleinen Radius, insbesondere einem Radius kleiner als 10 mm, stark mechanisch beansprucht wird. Die aufsteigende Person führt gemäß dem erfindungsgemäßen Verfahren das Seil, welches beispielsweise am Boden in einer Tonne, Tasche oder in einem sonstigen Aufbewahrungselement gelagert ist, durch die Vorrichtung hindurch und dann mit auf das zu besteigende Objekt. Es ist daher erforderlich, dass das Seil permanent von der aufsteigenden Person durch die Vorrichtung hindurch gezogen wird. Um das Durchziehen des Seils durch die erfindungsgemäße Vorrichtung besonders leichtgängig zu ermöglichen und das Seil nicht über Gebühr zu beanspruchen, sollten die Umlenkungen eine reibungsarme Durchführung des Seils ermöglichen. Dies kann entweder durch große Radien von vorzugsweise 10 mm oder größer oder besonders bevorzugt durch drehbar gelagerte Umlenkungen erfolgen, die das Hindurchziehen des Seils im Wesentlichen durch die Seillagerung und einen etwaig vorhandenen Schlupf des Seils im Bereich der Umlenkungen reduzieren.

Wie dem unabhängigen Verfahrensanspruch zu entnehmen ist, ist Merkmal c) nur erforderlich, wenn die erfindungsgemäße Vorrichtung noch nicht mit einem Seil vorkonfektioniert ist. Es ist nämlich auch möglich, dass die erfindungsgemäße Vorrichtung bereits ein Seil aufweist, was in der beschriebenen Weise durch die Vorrichtung geführt ist. Optional kann das Seil am personenseitigen Ende auch bereits mit einem Falldämpfer ausgestattet sein. Alternativ oder in Ergänzung dazu kann die erfindungsgemäße Vorrichtung auch einen Durchlass- bzw. Reibungsfalldämpfer aufweisen.

In einer praktischen Ausführungsform der Erfindung ist die zweite Umlenkung eine Umlenkrolle, welche auf der der ebenen Anlagefläche gegenüber liegenden Seite der Vorrichtung angeordnet ist. Wenn sie eine seitliche Begrenzung der Vorrichtung darstellt, gibt es keine weiteren Elemente der Vorrichtung, die auf der Seite der zweiten Umlenkung in horizontaler Richtung nach außen herausragen.

In einer weiteren praktischen Ausführungsform ist, bevorzugt in der oberen Hälfte der Vorrichtung, eine Seilführung in einem horizontalen Abstand zwischen 10 und 50 cm von der ersten Anlagefläche vorgesehen, bevorzugt in einem horizontalen Abstand zwischen 10 und 30 cm und besonders bevorzugt in einem horizontalen Abstand zwischen 15 und 25 cm. Vorzugsweise wird der Abstand so gewählt, dass das Seil von der Seilführung aus senkrecht nach oben durch die Einhängöse einer an einer Struktur montierten Sicherheitssteigsprosse gemäß EP 577 587 B1 führbar ist. In diesem Fall ist die Seilreibung beim Aufsteigen besonders gering, was für die aufsteigende Person kraftsparend ist.

Wenn eine quer zur ersten Anlagefläche angeordnete zweite Anlagefläche vorgesehen ist, kann die erfindungsgemäße Vorrichtung besonders sicher an einem zu besteigenden Objekt befestigt werden. Dies gilt insbesondere, wenn die zweite Anlagefläche u-förmig ausgebildet ist und senkrecht zur ersten Anlagefläche aausgebildet ist. Dann kann die erste Anlagefläche beispielsweise so ausgerichtet werden, dass sie seitlich an einem Strommasten anliegt und die u-förmige Anlagefläche so, dass sie die Sicherheitssteigsprosse einer Struktur umgreift. In diesem Fall kann die erfindungsgemäße Vorrichtung schon mit Hilfe der ersten und zweiten Anlageflächen sehr gut an das Objekt angepasst werden, an dem es fixiert werden soll, wodurch eine sichere Befestigung erleichtert wird.

Insbesondere dann, wenn die erfindungsgemäße Vorrichtung zusammen mit Sicherheitssteigsprossen gemäß EP 577 587 B1 verwendet werden soll, ist es ferner von Vorteil, wenn die zweite Anlagefläche derart angeordnet ist, dass deren Mittelebene beabstandet zu mindestens einer Mittelebene einer Umlenkung verläuft.

Wenn auf der Oberseite der Vorrichtung eine ebene Trittfläche mit einer Länge von mindestens 10 cm, bevorzugt mit einer Länge von 12 bis 20 cm und besonders bevorzugt mit einer Länge von 14 bis 18 cm, und einer Breite, die mindestens der Breite einer Sicherheitssteigsprosse gemäß EP 577 587 B1 entspricht, ausgebildet ist, erleichtert dies den Beginn des Aufstiegs auf einen Strommasten mit Hilfe der erfindungsgemäßen Vorrichtung. Ferner ist im Falle des Abstiegs sichergestellt, dass die absteigende Person auch die letzte (gesicherte) Sicherheitssteigsprosse sicher betreten kann. Da die Trittfläche andere Abmaße aufweist als die Sicherheitssteigsprossen, erhält eine absteigende Person ferner eine haptische Rückmeldung, dass er die erfindungsgemäße Vorrichtung erreicht hat.

In einer praktischen Ausführungsform lenken die erste Umlenkung und/oder die zweite Umlenkung das Seil um 120° bis 240°, bevorzugt um 150° bis 210° und besonders bevorzugt um 170° bis 190° um. Insbesondere wenn die erste Umlenkung das Seil um einen Winkel in dem vorstehend genannten Bereich umlenkt, kann die Vorrichtung zumindest teilweise mit Hilfe einer bekannten Höhensicherung realisiert werden. Zusätzlich zu der Höhensicherung ist allerdings eine zweite Umlenkung erforderlich, um das Seil von unten in die Vorrichtung einführbar und in Aufstiegsrichtung aus der Vorrichtung herausführbar zu machen und gleichzeitig sicherzustellen, dass das Seil bei Durchlaufen der Vorrichtung nicht mit weiteren Elementen in Kontakt tritt, was eine mechanische Belastung (z.B. Abrieb an kleinen Radien und/oder Kanten) zur Folge hätte.

In einer weiteren praktischen Ausführungsform der erfindungsgemäßen Vorrichtung ist im Bereich der zweiten Umlenkung ein Führungsglied angeordnet, wobei zwischen dem Führungsglied und der zweiten Umlenkung ein Abstand von 5 bis 20 mm, bevorzugt ein Abstand von 10 bis 18 mm und besonders bevorzugt ein Abstand von 12 bis 14 mm vorgesehen ist. Die Verwendung eines derartigen Führungsglieds hat den Vorteil, dass ein durch die erfindungsgemäße Vorrichtung geführtes Seil, dessen Seilende nicht geradlinig nach oben führt, sondern temporär vom Austritt aus der Vorrichtung bis zum Seilende schlaff ist, sich nicht zurück in die Vorrichtung bewegt, sondern von dem Führungsglied und der zweiten Umlenkung im Wesentlichen in Position gehalten wird. Als Abstand zwischen Führungsglied und der zweiten Umlenkung wird vorzugsweise ein Maß genommen, das ungefähr dem empfohlenen Seildurchmesser entspricht (Abweichung zum Durchmesser des Seils: -10% bis + 20%, besonders bevorzugt 0% bis 15%). Das Führungsglied hat darüber hinaus den Vorteil, dass es derart angeordnet und gestaltet sein kann, dass das Seil auch nach unten aus der Vorrichtung heraus geführt und bewegt werden kann, ohne dass die Gefahr besteht, dass das Seil durch Reibung an Kanten, kleinen Radien etc. mechanisch stark beansprucht wird.

Vorzugsweise umfasst das Führungsglied ein Drehlager und besonders bevorzugt ein Wälzlager. In diesem Fall kann das Führungsglied reibungsarm rotieren, wenn es vom Seil berührt wird und das Seil an dem Führungsglied entlang gleitet. Dadurch kann die Kraft, welche zum Durchziehen des Seils durch die Vorrichtung benötigt wird, reduziert werden. Es versteht sich, dass anstelle von Wälzlagern auch andere Lager eingesetzt werden können, wenn eine für den Einsatzzweck geeignete Lagerung möglich ist.

In einer weiteren praktischen Ausführungsform der erfindungsgemäßen Vorrichtung umfassen die Haltemittel zwei von einander beabstandete obere Halteelemente mit Durchgangsöffnungen, wobei die Halteelemente eine Öffnung bilden. Diese sollen es ermöglichen, die Vorrichtung innerhalb der Öffnung so zu positionieren, dass eine Struktur, insbesondere die Sprosse eines Strommasten, an der die Vorrichtung aufgehängt werden soll, zwischen den Halteelementen hindurch verläuft und die Vorrichtung durch Durchführen eines Sicherungselements durch die Durchgangsöffnung an der Struktur hängend fixierbar ist. Als Sicherungselement geeignet sind insbesondere ein Bolzen, ein Karabinerhaken oder ein Gurt. Die vorstehend beschriebenen Haltemittel haben den Vorteil, dass durch eine auf den Einsatzzweck der erfindungsgemäßen Vorrichtung abgestimmte Position der Halteelemente die korrekte Positionierung der erfindungsgemäßen Vorrichtung an dem zu besteigenden Element sichergestellt werden kann. Dazu muss der Abstand der oberen Halteelemente lediglich so gewählt werden, dass ein Aufhängen der Vorrichtung sich aufgrund der Abstände intuitiv ergibt. Beispielsweise kann der Abstand der beiden Halteelemente nur geringfügig größer gewählt werden als die Struktur, an der die Vorrichtung aufgehängt werden soll. Soll die Vorrichtung für das Besteigen eines Strommasten mit Standardsprossen oder Sicherheitssteigsprossen vorgesehen sein, welche einen Durchmesser von ca. 24 mm aufweisen, kann der Abstand der beiden Halteelemente voneinander beispielsweise 26 bis 30 mm, vorzugsweise 28 mm, gewählt werden. Der Abstand zwischen den Halteelementen ist bevorzugt um 0% bis 30% und besonders bevorzugt um 1% bis 15% größer als die Struktur, für welche die erfindungsgemäße Vorrichtung bestimmt ist.

In einer weiteren vorteilhaften Ausgestaltung der Erfindung weisen die Haltemittel mindestens eine Durchgangsöffnung mit einer ebenen Auflagefläche für das Festspannen der Vorrichtung mit Hilfe eines Gurtes auf, wobei die ebene Auflagefläche der Durchgangsöffnung vorzugsweise parallel zu der zweiten Anlagefläche angeordnet ist. Vorzugsweise sind zwei Durchgangsöffnungen mit zwei ebenen Auflageflächen vorgesehen, wobei beide Auflageflächen parallel zu der zweiten Anlagefläche angeordnet sind. Dies hat den Vorteil, dass die erfindungsgemäße Vorrichtung auf einfache und sichere Art und Weise mit einer Sicherheitssteigsprosse verbindbar ist.

Wenn die Haltemittel ein magnetisches Element umfassen, das derart dimensioniert und an der Vorrichtung positioniert ist, dass die Vorrichtung allein mit Hilfe des magnetischen Elements an einer metallischen Struktur, insbesondere an einem Strommasten, positionierbar ist, kann die erfindungsgemäße Vorrichtung zunächst sehr einfach mit Hilfe des magnetischen Elements an der zu besteigenden Struktur angeordnet werden. Dazu muss die Vorrichtung lediglich mit dem magnetischen Element an einem magnetischen oder magnetisierbaren Bereich der zu besteigenden Struktur in Kontakt gebracht werden. Die die erfindungsgemäße Vorrichtung montierende Person hat dann für die endgültige Fixierung der erfindungsgemäßen Vorrichtung (z.B. mit Hilfe von Seilen, Ketten, Karabinerhaken etc.) an der zu besteigenden Struktur beide Hände frei.

In einer weiteren vorteilhaften Ausgestaltung der erfindungsgemäßen Vorrichtung sind eine dritte Umlenkung und optional eine vierte Umlenkung vorgesehen, wobei die zweite Umlenkung, die dritte Umlenkung und optional die vierte Umlenkung vorzugsweise senkrecht übereinander angeordnet sind. Die Anordnung derartiger weiterer Umlenkungen hat den Vorteil, dass im Falle eines Absturzes die Kraft des Seiles nicht vollständig auf die zweite Umlenkung und den Mechanismus zur automatischen Blockierung des Seiles übertragen wird, sondern dass diese Kraft zunächst teilweise von der dritten und ggf. vierten Umlenkung aufgenommen und somit reduziert wird. Diesbezüglich bedarf es allerdings insofern eines Kompromisses als das Hindurchziehen des Seiles beim regulären Aufstieg möglichst leichtgängig vonstatten gehen soll, während es im Falle eines drohenden Absturzes vorteilhaft ist, wenn die auf den Mechanismus wirkende Kraft zum Schutz des Mechanismus und des Seiles nicht zu groß ist.

Die Umlenkungen und/oder die Seilführung, welche vorzugsweise mittels reibungsarmer Rollen realisiert sind, können aus einem metallischen Werkstoff oder aus einem Kunststoff gefertigt werden. Metallische Werkstoffe sind zwar besonders robust und langlebig, weisen jedoch auch ein höheres Gewicht auf. Umlenkungen aus Kunststoff haben den Vorteil, dass sie relativ leicht sind. Ferner können Kunststoffe verwendet werden, die im Falle einer Sturzbelastung Abriebspuren des Seiles hinterlassen. Dies ist insbesondere dann der Fall, wenn als Kunststoff ein Polyoxymethylen (POM) gewählt wird, insbesondere ein Homopolymer (POM H). In diesem Fall hinterlässt ein durch die erfindungsgemäße Vorrichtung geführtes Seil erkennbare Abriebspuren in den Umlenkrollen. Dies hat den Vorteil, dass die Umlenkrollen als Indikator verwendet werden können, ob die Vorrichtung bereits einer Belastung eines Sturzes ausgesetzt war. Ist dies der Fall sollte die Vorrichtung vor weiteren Einsätzen von einem Fachmann auf ihre Einsatzfähigkeit geprüft werden.

Die Seilreibung an den Umlenkungen ist besonders gering, wenn die erste Umlenkung, die zweite Umlenkung, die dritte Umlenkung und/oder die vierte Umlenkung Drehlager, insbesondere Wälzlager aufweisen. Diesbezügliche Vorteile wurden bereits im Zusammenhang mit dem Führungsglied beschrieben.

Im Falle eines Absturzes wirkt auf die erfindungsgemäße Vorrichtung üblicherweise eine nach oben gerichtete Kraft, da eine nach oben steigende Person beim Aufstieg das Seil in Sicherheitselemente (z.B. Sicherheitssteigsprossen) einhängt und das Seil beim Absturz an diesen Sicherheitselementen umgelenkt wird. Um zu verhindern, dass die nach oben gerichtete Seilkraft im Falle eines Absturzes die Position der erfindungsgemäßen Vorrichtung beeinflusst, ist es vorteilhaft, wenn die Haltemittel zwei voneinander beabstandete, untere Halteelemente umfassen, die vorzugsweise an den Außenseiten der Vorrichtung und besonders bevorzugt beweglich angeordnet sind. Als solche Haltemittel können beispielsweise metallische Ösen dienen, welche als Angriffspunkte für eine Kette oder ein sonstiges Fixiermittel dienen, welches von einer Seite der Vorrichtung um ein Fixierelement, beispielsweise die Sprosse oder eine Strebe eines Strommasten, herumgelegt und dann in die gegenüberliegende metallische Öse eingehängt wird. Zwei voneinander beanstandete Haltemittel sind deshalb vorteilhaft, weil diese so angeordnet werden können, dass bei fixierter Vorrichtung ein Freiraum für den Seildurchlass bleibt und nicht die Gefahr besteht, dass das Seil sich in dem Fixierelement (z.B. Kette, weiteres Seil etc.) verfängt.

Alternativ dazu können die Haltemittel mindestens eine Durchgangsöffnung mit einer ebenen Auflagefläche für das Festspannen der Vorrichtung mit Hilfe eines Gurtes umfassen, wobei die ebene Auflagefläche der Öffnung vorzugsweise parallel zu der ersten Anlagefläche angeordnet ist. In diesem Fall lässt sich die erfindungsgemäße Vorrichtung auch in horizontaler Richtung einfach und sicher mit Hilfe eines Gurtes an einem Strommasten fixieren. Besondere Sicherheitsanforderungen werden erfüllt, wenn zwei übereinander angeordnete Öffnungen mit ebenen Auflageflächen übereinander angeordnet sind und die Vorrichtung über zwei Gurte unabhängig voneinander mit einem Strommast verbunden wird.

Die Erfindung betrifft auch die Verwendung eines Höhensicherungsgerätes zur Installation desselben am Fuße einer zu besteigenden Struktur (d.h. im unteren Bereich) und zur Sicherung einer aufsteigenden Person mit Hilfe des unterhalb der aufsteigenden Person angeordneten Höhensicherungsgerätes.

Weitere vorteilhafte Ausführungsformen der erfindungsgemäßen Vorrichtung werden nachfolgend im Zusammenhang mit den Zeichnungen beschrieben. Es zeigen:
- Figur 1: eine erste Ausführungsform einer erfindungsgemäßen Vorrichtung zur Aufstiegssicherung mit einem abgenommenem Seitenteil und demontiertem Winkelelement in einer Ansicht von vorne,
- Figur 2: die erfindungsgemäße Vorrichtung aus Figur 1 im positionierten und fixierten Zustand an einem Strommasten,
- Figur 3: die in Figur 2 gezeigte erfindungsgemäße Vorrichtung in einer Ansicht gemäß dem Pfeil III in Fig. 2,
- Figur 4: eine vergrößerte Darstellung des in Figur 3 bis IV mit einem Kreis gekennzeichneten Bereichs,
- Figur 5: eine zweite Ausführungsform einer erfindungsgemäßen Vorrichtung zusammen mit einer an einem Strommast montierten Sicherheitsteigsprosse in einer Ansicht von links,
- Figur 6: die zweite Ausführungsform mit Strommast und mit eingelegtem Seil in einer Ansicht von links,
- Figur 7: die zweite Ausführungsform mit Strommast in einer Ansicht von rechts,
- Figur 8: die zweite Ausführungsform mit Strommast in einer Ansicht von vorne,
- Figur 9: die zweite Ausführungsform mit Strommast in einer Ansicht von oben,
- Figur 10: die zweite Ausführungsform in einer Ansicht von vorne,
- Figur 11: die zweite Ausführungsform in einer Ansicht von hinten
- Figur 12: eine dritte Ausführungsform der erfindungsgemäßen Vorrichtung basierend auf der zweiten Ausführungsform in einer Ansicht von schräg hinten,
- Figur 13: die Seildurchlasshemmvorrichtung der dritten Ausführungsform in einer Seitenansicht und
- Figur 14: die zweite Ausführungsform in einer Ansicht von schräg unten.

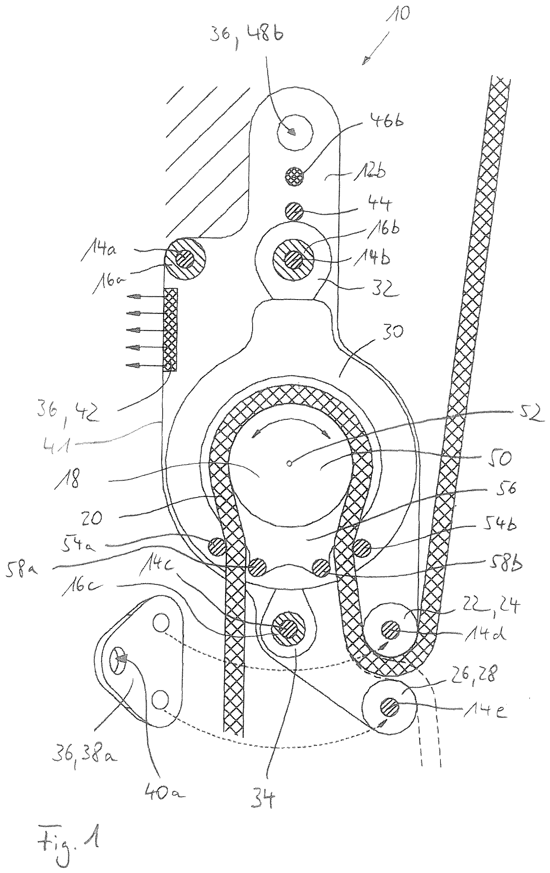

Die Figuren 1 bis 4 zeigen ein Ausführungsbeispiel einer erfindungsgemäßen Vorrichtung 10. Sie besteht im Wesentlichen aus:
- Seitenteilen 12a, 12b
- einer Seildurchlasshemmvorrichtung 30 mit Befestigungsösen 32, 34 und einer ersten Umlenkung 18,
- einer zweiten Umlenkung 24 sowie
- Haltemitteln 36.

Die in den Figuren 1-4 gezeigte Vorrichtung weist eine Länge von ca. 40 cm und eine Breite von ca. 16 cm auf.

Das erste Seitenteil 12a und das zweites Seitenteil 12b begrenzen die Vorrichtung seitlich durch im Wesentlichen glatte Außenflächen. Der Abstand der Außenflächen zueinander (Dicke der Vorrichtung ohne überstehende Schraubenköpfe) beträgt ca. 5,5 cm. Die Seitenfläche 12a ist in Figur 1 nicht dargestellt, damit die hinter dieser Seitenfläche befindlichen Elemente der erfindungsgemäßen Vorrichtung sichtbar sind. Die Seitenflächen 12a, 12b sind über mehrere Schraubbolzen 14a, 14b, 14c, 14d, 14e miteinander verbunden. Dabei sind die Schraubbolzen 14a, 14b und 14c durch Distanzhülsen 16a, 16b, 16c durchgesteckt, welche den Abstand zwischen dem rechten Seitenteil 12a und dem linken Seitenteil 12b bestimmen.

Die Seitenteile 12a, 12b sind vorzugsweise aus einem biegesteifen Material gefertigt und weisen vorzugsweise eine Dicke von mehr als 3 mm auf. In der gezeigten Ausführungsform sind die Seitenteile 12a, 12b aus 4 mm dickem Stahl hergestellt. Die gezeigten Distanzhülsen weisen eine Länge von 45 mm auf.

Die zwischen den Seitenteilen 12a und 12b angeordnete erste Umlenkung 18 dient dazu, ein von unten in die Vorrichtung eingeführtes Seil 20, das in der gezeigten Ausführungsform einen Durchmesser von 12 mm aufweist, um ca. 180° umzulenken. Der Schraubbolzen 14d ist durch drei nebeneinander angeordnete Drehlager 22a, 22b, 22c hindurchgeführt, welche eine zweite Umlenkung 24 bilden und das Seil noch einmal um ca. 180° umlenken und einen Seilaustritt seitlich aus der Vorrichtung nach oben ermöglichen.

Als Führungsglied 26 sind unterhalb der zweiten Umlenkung 24 im Abstand von ca. 13 mm von den Drehlagern 22a, 22b, 22c weitere Drehlager 28a, 28b, 28c an dem Schraubbolzen 14e vorgesehen. Dieses Führungsglied 26 verhindert, dass ein aus der Vorrichtung herausführendes, erschlafftes Seil seine Position innerhalb der Vorrichtung wesentlich verändert. In Figur 1 gestrichelt dargestellt ist der Verlauf eines aus der Vorrichtung herausführenden Seiles, das nicht unter Spannung steht. Das Führungsglied 26 hat ferner den Vorteil, dass das Seil unter Spannung nach unten führbar ist, ohne dass die Gefahr besteht, dass es durch Reibung an kleinen Radien oder Kanten mechanisch beschädigt wird.

Seitlich an die Drehlager 22a, 22c, 28a, 28c schließen sich jeweils eine Unterlegscheibe (nicht gezeigt) und jeweils ein Distanzstück 25a, 25b an. Mit den Unterlegscheiben wird verhindert, dass die seitlichen Drehlager 22a, 22c, 28a, 28c innen an den Distanzstücken 25a, 25b anstoßen. Die Distanzstücke 25a, 25b weisen Radien von bevorzugt mindestens 5 mm, besonders bevorzugt mindestens 10 mm, auf, damit ein möglicherweise seitlich austretendes Seil 20 nicht seitlich an scharfen Kanten reiben kann und dadurch mechanisch beschädigt wird.

Die Distanzhülsen 16b und 16c dienen - wie insbesondere in Figur 1 zu erkennen ist - nicht nur dazu, den Abstand des rechten Seitenteils 12a von dem linken Seitenteil 12b vorzugeben. Sie dienen gleichzeitig dazu, die Seildurchlasshemmvorrichtung 30 mit deren oberer Befestigungsöse 32 und deren unterer Befestigungsöse 34 innerhalb der Vorrichtung 10 zu fixieren.

Sowohl an dem rechten Seitenteil 12a als auch an dem linken Seitenteil 12b ist als Haltemittel 36 jeweils ein Winkelelement 38a, 38b angeordnet. In Figur 1 ist exemplarisch nur das Winkelelement 38a dargestellt. Dazu werden die beiden Winkelelemente jeweils über die Schraubbolzen 14d bzw. 14e mit dem Seitenteil 12a bzw. 12b verschraubt. Durch die in den Winkelementen 38a, 38b vorgesehenen Öffnungen 40a, 40b kann beispielsweise eine Kette oder ein sonstiges Befestigungsmittel geführt werden, um die erfindungsgemäße Vorrichtung 10 an einem Masten oder an einer sonstigen zu besteigenden Struktur zu fixieren. Die Fixierung mit Hilfe des Winkelelements 38 dient primär dazu, die erfindungsgemäße Vorrichtung davor zu sichern, dass diese im Fall eines Absturzes der aufsteigenden Person von der nach oben wirkenden Zugkraft des Seiles nach oben bewegt wird.

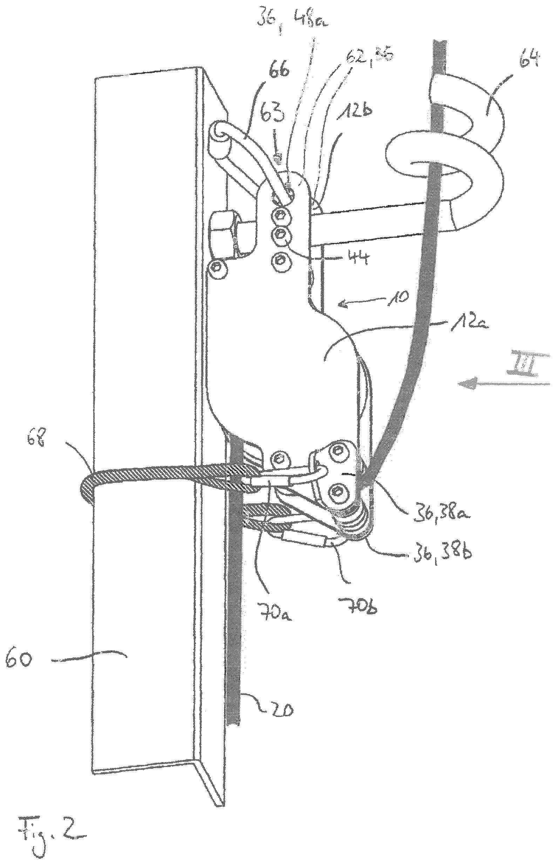

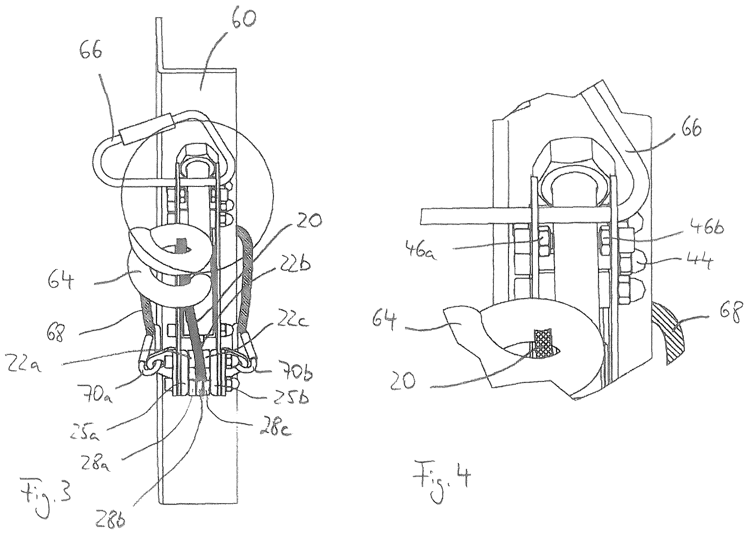

Wie in Figur 1 zu erkennen, ist im Bereich einer seitlichen, ebenen Anlagefläche 41 der erfindungsgemäßen Vorrichtung ein großflächiger Magnet 42 vorgesehen, welcher so dimensioniert ist, dass er bei flächiger Anlage an einem Strommasten aus magnetischem Material die Vorrichtung trägt. Es bleibt dem Fachmann überlassen, ob er einen Permanentmagneten oder einen Elektromagneten wählt. Das Vorsehen eines Magneten hat den Vorteil, dass die Vorrichtung zunächst ohne weitere Sicherung vorpositioniert werden kann, bevor dann Haltemittel - wie zum Beispiel in den Figuren 2 und 3 gezeigt, ein Seil 68 und Karabinerhaken 70a, 70b - eingesetzt werden, um die Vorrichtung mit Hilfe der Winkelelemente 38a, 38b an der Struktur (in den Figuren 2 und 3 an einem Strommast 60) zu fixieren.

Oberhalb des Schraubbolzens 14b weist die Vorrichtung eine weitere Schraube bzw. einen Bolzen 44 auf, welcher sich von dem rechten Seitenteil 12a zum linken Seitenteil 12b erstreckt. Die Schraube bzw. der Bolzen 44 kann feststehend oder drehbar gelagert sein. Oberhalb der Schraube bzw. des Bolzens 44 sind weitere Bolzen 46a, 46b angeordnet, welche sich von dem Seitenteil 12a bzw. von dem Seitenteil 12b horizontal in die Mitte der Vorrichtung erstrecken. Zwischen den Bolzen ist ein Freiraum vorgesehen, der es zulässt, dass eine Sprosse 64 (vgl. Figur 4) oder ein sonstiges Halteelement durch den zwischen den Bolzen 46a, 46b vorgesehenen Freiraum hindurch gesteckt wird. Die Funktion der Bolzen 46a, 46b wird nachfolgend noch im Detail erläutert.

Oberhalb der Bolzen 46a, 46b weisen die Seitenteile 12a, 12b Durchgangsöffnungen 48a, 48b auf, die weitere Haltemittel 36 im Sinne der Erfindung sind. Diese dienen dazu, einen in Figur 1 nicht dargestellten Bolzen oder einen Karabinerhaken durch beide Öffnungen durchzuführen, um die Vorrichtung hängend an einer Struktur zu fixieren. Einzelheiten dazu werden nachfolgend noch anhand einer Zeichnung erläutert.

Wie in Figur 1 zu erkennen ist, ist die erste Umlenkung 18 Bestandteil einer zwischen dem ersten Seitenteil 12a und dem zweiten Seitenteil 12b fixierten Seildurchlasshemmungsvorrichtung 30. Bei der gezeigten Seildurchlasshemmungsvorrichtung 30 handelt es sich um eine Vorrichtung, die nach dem gleichen Prinzip funktioniert wie ein von der Firma International Safety Components Ltd. (GB) erstmalig im Herbst 2009 unter dem Produktnamen ALF vorgestellten Höhensicherungsgerät.

Die Seildurchlasshemmungsvorrichtung 30 umfasst eine Umlenkrolle 50 mit einer kerbförmigen Aussparung, welche eine Verzahnung aufweist. Die Umlenkrolle 50 kann in zwei Richtungen um die Drehachse 52 rotieren. Die Seildurchlasshemmvorrichtung 30 umfasst ferner zwei feststehende Elemente 54a, 54b und ein drehbar gelagertes Element 56 mit daran angeformten Klemmelementen 58a, 58b. Stürzt die aufsteigende Person, wird das Seil von der Person um die zuletzt umwickelte Sicherheitssteigsprosse 64 gezogen und übt eine Zugkraft nach oben aus. Dadurch übt das Seil 20 eine nach oben gerichtete Zugkraft auf die erfindungsgemäße Vorrichtung 10 auf und wird durch die Vorrichtung hindurch gezogen. Wird eine gewisse Rotationsgeschwindigkeit in der Umlenkung 18 überschritten, bewegt sich das drehbare Teil 56 in die Bewegungsrichtung des Seiles und klemmt das Seil zwischen einem Klemmelement 58a bzw. 58b des drehbaren Teils 56 und einem feststehenden Element 54a bzw. 54b ein. Beim Sturz einer aufsteigenden Person wird das Seil daher nach einer kurzen Absturzphase aufgrund der Seilgeschwindigkeit von der Seildurchlasshemmvorrichtung 30 eingeklemmt und an einer weiteren Bewegung gehindert. Die vom Absturz bedrohte Person wird dann sicher von dem Seil 20 gehalten.

Wie in Figur 1 zu erkennen, weisen die Klemmelemente 58a, 58b Radien auf, um das Seil beim Klemmvorgang ohne scharfe Kanten am Durchlass zu hemmen. Das eingeklemmte Seil kann dadurch gelöst werden, dass auf der der Person gegenüber liegenden Seite des Seiles gezogen wird. Aufgrund der symmetrischen Gestaltung des Klemmmechanismus funktioniert dieser in beide Umlaufrichtungen des Seils.

Die zweite Umlenkung 24 bewirkt eine zusätzliche Seilreibung, welche die Zugkraft des Seiles vor der ersten Umlenkung und der im Bereich dieser Umlenkung vorgesehenen Seildurchlasshemmvorrichtung 30 reduziert. Dadurch kann die Belastung des Seiles beim Abklemmen und die Belastung der Seildurchlasshemmvorrichtung 30 reduziert werden. Um die Belastung weiter zu reduzieren, können oberhalb der zweiten Umlenkung auch eine dritte und gegebenenfalls eine vierte Umlenkung vorgesehen sein. Es ist selbstverständlich auch möglich, eine fünfte, eine sechste und weitere Umlenkungen vorzusehen, um die Belastung darüber hinaus zu reduzieren.

Wie in Figur 2 gezeigt, ist das gezeigte Ausführungsbeispiel ideal geeignet, um im Zusammenhang mit einer Sicherheitssteigsprosse, beispielsweise mit der in der europäischen Patentschrift EP 577 587 B1 beschriebenen Sicherheitssteigsprosse, eingesetzt zu werden. Es kann jedoch auch mit sonstigen Strukturen, insbesondere mit Standard-Steigsprossen von Strommasten verwendet werden.

Zur Fixierung der Vorrichtung 10 an einem Strommasten wird diese entlang eines Strommasts 60 so weit nach oben geschoben, bis die als Haltemittel 36 dienenden, an den Seitenteilen 12a, 12b ausgebildeten Halteelemente 62 mit Durchgangsöffnungen 48a, 48b eine an dem Strommasten 60 befestigte Sicherheitssteigsprosse 64 umschließen und ein Karabinerhaken 66 durch die Durchgangsöffnungen 48a, 48b in den Halteelementen 62 hindurchgeführt werden kann (vgl. Figuren 2-4). Wie insbesondere in Figur 4 zu erkennen ist, sind die Bolzen 44, 46a, 46b so dimensioniert, dass die Sicherheitssteigsprosse 64 zwischen dem Karabinerhaken 66 und den Bolzen 44, 46a, 46b nur wenig Spiel hat. Die Sicherheitssteigsprossen weisen in der Praxis einen Durchmesser von ca. 24 mm auf. Ein bevorzugter Abstand zwischen den Bolzen 46a, 46b sowie zwischen einem durch die Durchgangsöffnungen 48a, 48b durchgeführten Karabinerhaken und dem Bolzen 44 beträgt daher ca. 28 mm.

Vorzugsweise wird die erfindungsgemäße Vorrichtung zusätzlich im unteren Bereich durch eine Kette oder ein sonstiges Befestigungselement mit den Winkelelementen 38a, 38b an den Masten 60 befestigt. In den Figuren 2 und 3 ist als Befestigungselement ein Seil 68 mit Karabinerhaken 70a, 70b gezeigt. Dadurch kann verhindert werden, dass eine nach oben wirkende Zugkraft des Seiles (die zum Beispiel auftritt, wenn eine Person abzustürzen droht) die erfindungsgemäße Vorrichtung aus ihrer Position bewegt und beispielsweise nach oben klappt.

Bei dem vorstehend beschriebenen Ausführungsbeispiel wurden möglichst viele existierende Normteile verwendet, um die Herstellungskosten gering zu halten. Es versteht sich, dass die Vorrichtung auch mit weniger Teilen herstellbar ist, wenn mehrere Elemente als integrale Bestandteile gestaltet werden. Beispielsweise könnten die Seitenteile 12a, 12b und die Seildurchlasshemmvorrichtung 30 einstückig hergestellt und zu einem Bauteil zusammengefasst werden.

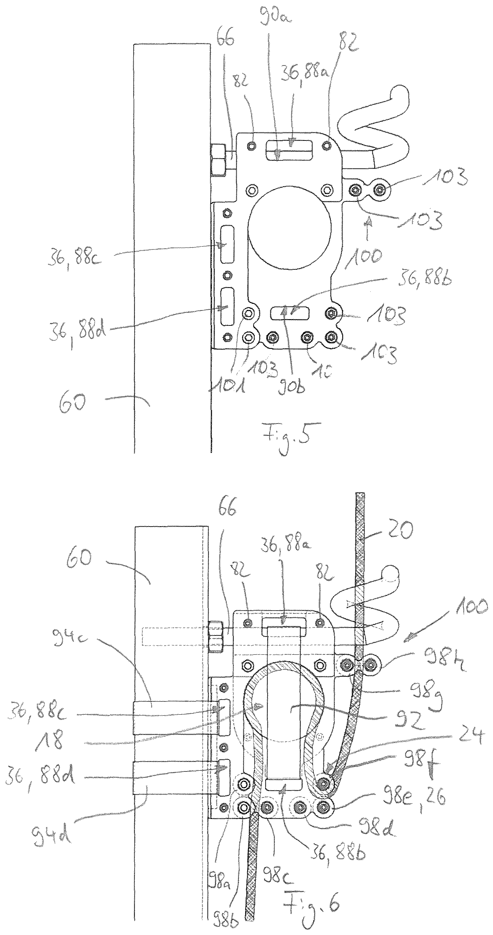

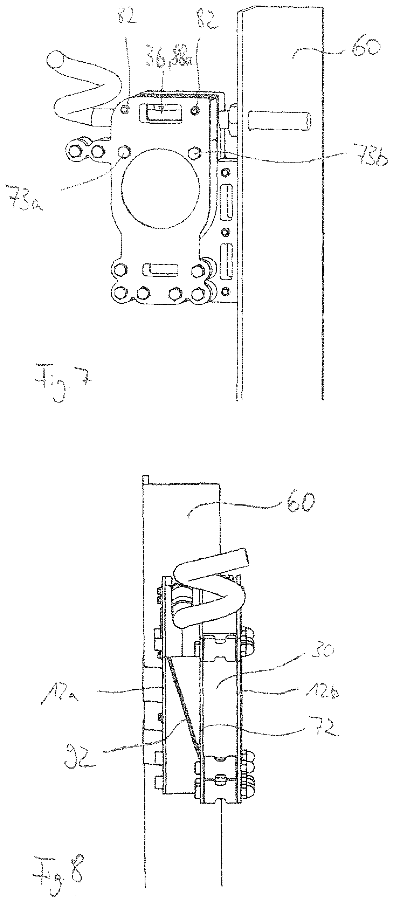

In den Figuren 5-12 sind eine zweite und eine dritte Ausführungsform der erfindungsgemäßen Vorrichtung gezeigt. Für identische oder funktionsgleiche Elemente werden zur Erleichterung des Verständnisses im Folgenden die gleichen Bezugszeichen verwendet wie bei der ersten Ausführungsform.

Die Gesamthöhe der zweiten und dritten Ausführungsform beträgt ca. 26 cm, die Gesamtbreite ca. 24 cm. Die Tiefe ohne Schraubenköpfe beträgt ca. 10 cm.

Die zweite und dritte Ausführungsform weisen ebenfalls Seitenteile 12a, 12b, eine Seildurchlasshemmvorrichtung 30 mit einer ersten Umlenkung 24 sowie Haltemittel 36 auf. Die Seitenteile 12a, 12b begrenzen die Vorrichtung wiederum durch im Wesentlichen glatte Außenflächen. Im Unterschied zur ersten Ausführungsform ist zwischen den Seitenteilen 12a, 12b ein Mittelteil 72 angeordnet. Hinsichtlich des Materials und der Materialstärke für die Seitenteile 12a, 12b sowie für das Mittelteil 72 gelten für die zweite und dritte Ausführungsform die vorstehenden Ausführungen zu den Seitenteilen 12a, 12b der ersten Ausführungsform.

Zwischen dem Mittelteil 72 und dem Seitenteil 12b ist die Seildurchlasshemmvorrichtung 30 angeordnet. Das Innenleben der Seildurchlasshemmvorrichtung 30 ist zwar in den Figuren 5 bis 13 nicht dargestellt. Da es jedoch identisch mit dem Innenleben der Seildurchlasshemmvorrichtung 30 der in den Figuren 1 bis 4 gezeigten ersten Ausführungsform ist, wird hiermit auf diese Figuren verwiesen.

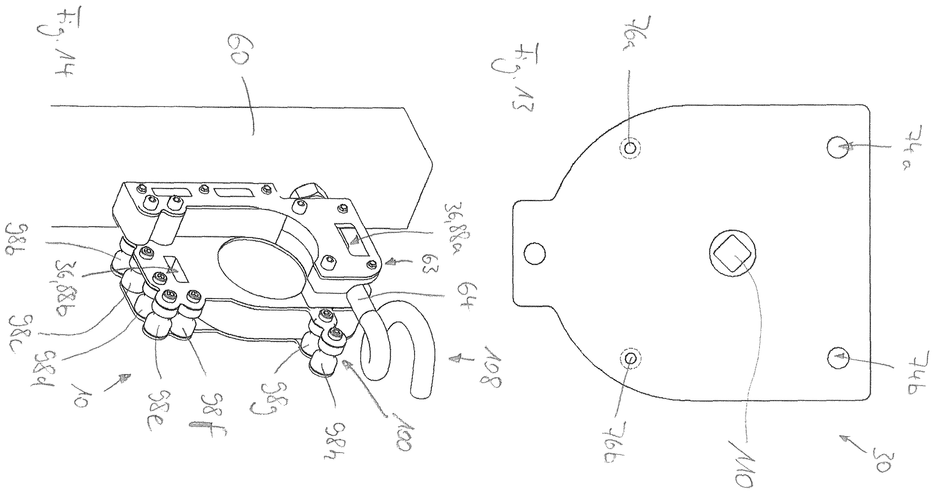

Nicht identisch sind die Gehäuseform und die Befestigung der Seildurchlasshemmvorrichtung 30. In der zweiten und dritten Ausführungsform ist die Seildurchlasshemmvorrichtung 30 mit Hilfe von zwei Schraubverbindungen 73a, 73b zwischen dem Mittelteil 72 und dem Seitenteil 12b fixiert. Zur Aufnahme der Schrauben sind in der Seildurchlasshemmvorrichtung 30 zwei entsprechende Bohrungen 74 vorgesehen (vgl. Fig. 13).

Mit den in Figur 13 angedeuteten Schrauben 76 ist das Gehäuse der Seildurchlasshemmvorrichtung 30 verschraubt.

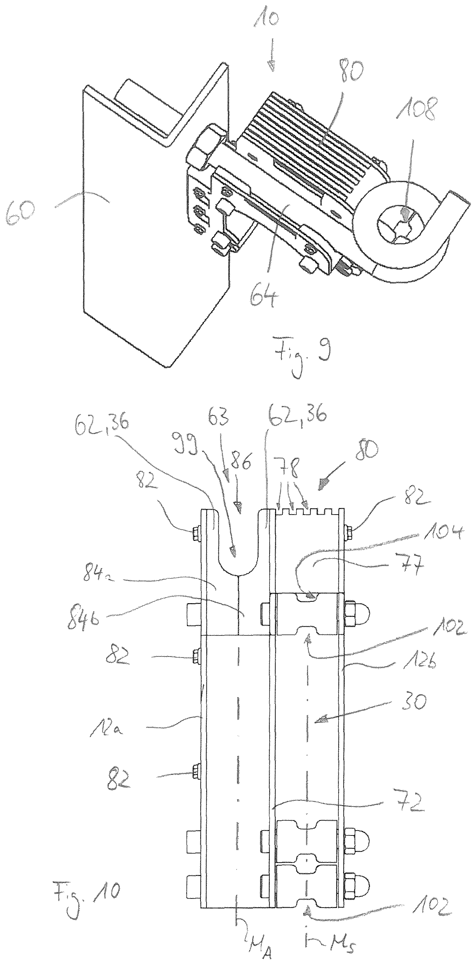

Ebenfalls zwischen dem Mittelteil 72 und dem Seitenteil 12b ist ein im Wesentlichen quaderförmiges Element 77 angeordnet, dessen Oberseite Längsrillen 78 aufweist und zusammen mit den oberen Kanten des Mittelteils 72 und der Seitenteile 12a, 12b als Trittfläche 80 dienen (vgl. Fig. 10). Das Element 76 besteht in der gezeigten Ausführungsform aus Polyoxymethylen Copolymer (auch POM C genannt). Es ist mit gewindefurchenden Schrauben 82 mit dem Seitenteil 12b und dem Mittelteil 72 verschraubt.

Zwischen dem Mittelteil 72 und dem Seitenteil 12a sind zwei weitere spiegelsymmetrisch zueinander ausgebildete Elemente 84a, 84b angeordnet, die zusammen eine von der Oberseite der Vorrichtung zugängliche u-förmige Rinne 88 bilden (vgl. Fig. 10). Beide Elemente 84a, 84b sind über gewindefurchende Schrauben 82 mit dem Seitenteil 12a bzw. mit dem Mittelteil 72 verschraubt. Für die Verschraubung des inneren Elements 84b, des Mittelteils 72 und des quaderförmigen Elements 77 können nicht dargestellte gewindefurchende Schrauben verwendet werden. Vorzugsweise sind dazu im senkrechten Abschnitt des Elements 84b auf der Innenseite Senklöcher vorgesehen, damit die Köpfe der gewindefurchenden Schrauben nach dem Verschrauben mit dem Mittelteil 72 und dem quaderförmigen Element 77 nicht hervorstehen. In der dargestellten zweiten und dritten Ausführungsform wurden zwei Schrauben zur Verschraubung des Elements 84b mit dem Mittelteil 72 und dem quaderförmigen Element 77 verwendet.

Die Breite der u-förmigen Rinne 88 beträgt bevorzugt 20 mm bis 35 mm und besonders bevorzugt 24 mm bis 30 mm. In der gezeigten Ausführungsform wurde eine Breite von 26 mm gewählt. Die Höhe der u-förmigen Rinne 88 ist vorzugsweise größer als 24 mm, besonders bevorzugt größer als 35 mm. Sie wurde bei der zweiten und dritten Ausführungsform mit 50 mm so gewählt, dass eine Sicherheitssteigsprosse gemäß EP 577 587 B1 deutlich in der u-förmigen Rinne versenkbar ist.

Wie insbesondere in den Figuren 5 bis 7 zu erkennen ist, weist die Vorrichtung als Haltemittel 36 im oberen Bereich eine Durchgangsöffnung 88a mit einer ebenen Auflagefläche 90a auf. Weitere, ähnlich gestaltete Durchgangsöffnungen 88b, 88c, 88d mit ebenen Auflageflächen 90b, 90c, 90d sind im unteren Bereich bzw. im Bereich der ersten Anlagefläche 41 ausgebildet. Die Durchgangsöffnungen 88a, 88b dienen dazu, die Vorrichtung mit Hilfe eines Vertikalgurts 92 an einer durch die u-förmige Rinne verlaufende Sicherheitssteigsprosse 64 zu fixieren. Dazu ist die Durchgangsöffnung 88a so angeordnet, dass der Abstand zwischen dem tiefsten Punkt der u-förmigen Rinne und der ebenen Auflagefläche 90a kleiner ist als der Durchmesser der Sicherheitssteigsprosse 64. Dies führt dazu, dass die Sicherheitssteigsprosse 64 - wie in den Figuren 5 bis 7 zu sehen ist - über die ebene Auflagefläche 90a hinausragt. Mit Hilfe des Vertikalgurts 92 kann daher die Vorrichtung 10 gegen die Sicherheitssteigsprosse gepresst und gegenüber dieser fixiert werden.

In gleicher Art und Weise kann die Vorrichtung 10 in horizontaler Richtung durch zwei Horizontalgurte 94c, 94d über die Durchgangsöffnungen 88c, 88d gegenüber einem Strommast 60 fixiert werden. Es versteht sich, dass prinzipiell auch ein Horizontalgurt ausreichen würde, um die Vorrichtung vollständig zu fixieren. Die gezeigte zweite und dritte Ausführungsform werden erhöhten Sicherheitsanforderungen insofern gerecht, als auch ein vollständiges Versagen einer der Gurtverbindungen 94c, 94d keine Auswirkungen auf die Sicherheit der zu sichernden Person hat.

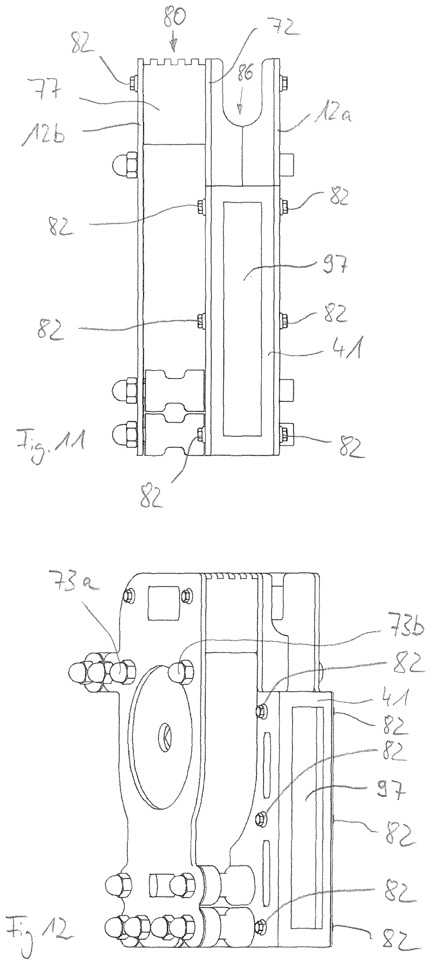

Wie insbesondere in den Figuren 11 und 12 gezeigt, ist im Bereich der ersten, ebenen Anlagefläche 41 zwischen dem Mittelteil 72 und dem Seitenteil 12a ein im wesentlichen trapezförmiges Element 96 aus POM C angeordnet, das mit Hilfe je drei gewindefurchender Schrauben 82 auf jeder Seite mit dem Mittelteil 72 und dem Seitenteil 12a verschraubt ist. Das Element 96 steht gegenüber den seitlichen Kanten des Mittelteils 72 und des Seitenteils 12a hervor (vorzugsweise um wenige Millimeter), damit beim Anlegen der Vorrichtung an einen Strommast 60 dieser nicht beschädigt wird. In dem Element 96 ist eine im Wesentlichen quaderförmige Vertiefung 97 zur Aufnahme eines nicht gezeigten Magneten vorgesehen. Dieser kann beispielsweise in die Vertiefung 97 eingeklebt werden. Der Magnet wird vorzugsweise so gewählt, dass er im eingesetzten Zustand etwas zurückversetzt ist. Um den Magneten endgültig in der Vertiefung 97 zu fixieren und den Bereich der quaderförmigen Vertiefung 97 als Teil der ersten ebenen Auflagefläche 41 zu gestalten, kann die Vertiefung 97 nach Einsetzen des Magneten mit einer geeigneten Füllmasse aufgefüllt werden.

Zwischen dem Seitenteil 12b und dem Mittelteil 72 sind als Umlenkungen 24 bzw. als Seilführung 100 insgesamt acht Rollen 98 angeordnet. Diese sind aus einem POM H hergestellt. Sie sind rotationssymmetrisch ausgebildet und weisen in der Mitte eine Vertiefung 102 mit nach innen gerichteten Schrägen 104 auf, um zu verhindern, dass ein über die Rollen 98 geführtes Seil nach außen auswandert. Die Rollen 98a, 98b sind über Durchgangsschrauben 101 gelagert, welche die Seitenteile 12a, 12b miteinander verbinden. Die Rollen 98c-h sind über Verbindungsschrauben 103 gelagert, die das Mittelteil 72 und das Seitenteil 12b miteinander verbinden. Um sicherzustellen, dass die Rollen 98 sich möglichst reibungsarm drehen können, ist über Hülsen oder sonstige Mittel sichergestellt, dass der Abstand zwischen dem Mittelteil 72 und dem Seitenteil 12b stets größer ist als die Breite der Rollen. Beispielsweise können als Verbindungsmittel Bolzen mit Innengewinde eingesetzt werden, in welche beidseitig Schrauben eingedreht werden. Durch eine geeignete Wahl der Länge der Bolzen kann sichergestellt werden, dass zwischen den miteinander verbundenen Elementen 12b, 72 ausreichend Raum bleibt, dass die Rollen sich frei drehen können.

Wie insbesondere in den Figuren 5 bis 7 zu erkennen ist, verlaufen die als u-förmige Rinne 86 ausgebildete zweite Anlagefläche 99 und die erste Anlagefläche 41 senkrecht zueinander.

Hinsichtlich der Führung des Seiles innerhalb der Vorrichtung, die in Figur 6 gezeigt ist, wird auf die erste Ausführungsform verwiesen.

Wie insbesondere in den Figuren 5 und 6 zu erkennen ist, weist die zweite und dritte Ausführungsform der erfindungsgemäßen Vorrichtung im oberen Bereich einen seitlich aus der Vorrichtung herausragenden Arm 106 mit den als Seilführung 100 angeordneten Rollen 98g, 98h auf. Dieser Arm ist so angeordnet und dimensioniert, dass er das Seil mit geringer Reibung senkrecht nach oben durch die Einhängöse 108 einer Sicherheitssteigsprosse gemäß EP 577 587 B1 führt. Die Rollen 98g, 98h der Seilführung haben bevorzugt einen Abstand von weniger als 9 mm zueinander, besonders bevorzugt einen Abstand von weniger als 5 mm zueinander. In der gezeigten Ausführungsform ist der Abstand ca. 2 mm. Da das in einigen Figuren gezeigte Seil 20 einen Durchmesser von 9 mm aufweist, ist durch den Abstand von 2 mm (oder kleiner) sichergestellt, dass das Seil nicht von dem mittleren Bereich der Rollen 98g, 98h mit den Vertiefungen 102 nach außen auswandert und sich somit einklemmen könnte.

Es versteht sich, dass für die Seilführung 100 statt eines seitlich aus der Vorrichtung herausragenden Arms auch die Geometrie der Vorrichtung derart verändert werden kann, dass die Seilführung innerhalb der Vorrichtung angeordnet ist.

Insbesondere in den Figuren 10 bis 12 ist zu erkennen, dass die Führung des Seiles, die zwischen dem Mittelteil 72 und dem Seitenteil 12b erfolgt, seitlich versetzt zur zweiten Anlagefläche 99 vorgesehen ist. Die Mittelebenen der Führungsebene des Seiles M_{S} und die Mittelebene der zweiten Anlagefläche M_{A} weisen in der zweiten und dritten Ausführungsform einen Abstand von ca. 5 cm auf. Bevorzugte Abstände für diese Ebenen sind 2 bis 10 cm.

In den Figuren 5 und 14 ist gut zu erkennen, dass das Seitenteil 12b und das Mittelteil 72 im Bereich der Rollen 98 und der Seilführung 100 Radien aufweisen, um das Seil 20 nicht zu schädigen.

Wie in den Figuren 12 und 13 erkennbar ist, weist die Seildurchlasshemmvorrichtung 30 in der dritten Ausführungsform im Bereich der Drehachse der ersten Umlenkung 18 ein Profil bzw. eine Ausnehmung 110 für den Angriff eines Werkzeuges auf. In der gezeigten Ausführungsform ist eine Ausnehmung für den Angriff eines Vierkantschlüssels ausgebildet. Dies hat den Vorteil, dass im Falle eines Absturzes einer Person durch Einsatz einer "Ratsche", eines Antriebsmotors oder eines sonstigen Hilfsmittels unter Einsatz motorischer Hilfskraft oder bekannter Hebelgesetze, die Person kontrolliert und kraftschonend durch Betätigung der Seildurchlasshemmung als Seiltrieb abgelassen oder angehoben werden kann.

Vorzugsweise wird die erfindungsgemäße Vorrichtung mit Seilen verwendet, mit denen sichergestellt ist, dass im Falle eines Sturzes einer Person, die auf die Person wirkende Kraft geringer ist als 6 kN.

### Bezugszeichenliste

- 10: erfindungsgemäße Vorrichtung
- 12: Seitenteile
- 14: Schraubbolzen
- 16: Distanzhülsen
- 18: erste Umlenkung
- 20: Seil
- 22: Drehlager
- 24: zweite / weitere Umlenkung
- 25: Distanzstücke
- 26: Führungsglied
- 28: Drehlager
- 30: Seildurchlasshemmvorrichtung
- 32: Befestigungsöse
- 34: Befestigungsöse
- 36: Haltemittel
- 38: Winkelelemente
- 40: Öffnungen
- 41: erste Anlagefläche
- 42: Magnet
- 44: Bolzen
- 46: weitere Bolzen
- 48: Durchgangsöffnungen
- 50: Umlenkrolle
- 52: Drehachse
- 54: feststehende Elemente
- 56: drehbar gelagertes Element
- 58: Klemmelemente
- 60: Strommast
- 62: Halteelemente
- 63: Öffnung
- 64: Sicherheitssteigsprosse
- 66: Karabinerhaken
- 68: Seil
- 70: Karabinerhaken
- 72: Mittelteil
- 73: Schraubverbindungen
- 74: Bohrungen
- 76: Schrauben
- 77: quaderförmiges Element
- 78: Längsrillen
- 80: Trittfläche
- 82: gewindefurchende Schrauben
- 84: Elemente für u-förmige Rinne
- 86: u-förmige Rinne
- 88: Durchgangsöffnungen
- 90: ebene Auflagefläche
- 92: Vertikalgurt
- 94: Horizontalgurte
- 96: trapezförmiges Element
- 97: quaderförmige Vertiefung
- 98: Rollen
- 99: zweite Anlagefläche
- 100: Seilführung
- 101: Durchgangsschrauben
- 102: Vertiefungen
- 103: Verbindungsschrauben
- 104: Schrägen
- 106: Arm
- 108: Einhängöse
- 110: Profil / Ausnehmung für Werkzeug

## Patentansprüche

1. Vorrichtung zur Aufstiegssicherung einer aufsteigenden Person mit einem von der aufsteigenden Person mitzuführenden losen Seil (20), umfassend
a) Haltemittel (36) zum Fixieren der Vorrichtung an einem festen Verankerungspunkt in einer vorgegebenen Position,
b) eine konstruktive Gestaltung, die es ermöglicht, das Seil (20) von unten in die in der vorgegebenen Position fixierte Vorrichtung einzuführen,
c) mindestens eine erste Umlenkung (18), mittels welcher das in die Vorrichtung einzuführende Seil (20) auf einer gekrümmten Bahn durch die Vorrichtung hindurch führbar ist,
d) einen Mechanismus, der eine automatische Blockierung des Seils (20) bewirkt, wenn die Geschwindigkeit des Seils (20) durch die Vorrichtung einen vorgegebenen Grenzwert überschreitet, wobei
e) mindestens eine zweite Umlenkung (24) vorgesehen ist, mittels welcher das aus der Vorrichtung austretende Seil (20) in Aufstiegsrichtung aus der Vorrichtung heraus führbar ist und wobei
f) eine seitlich angeordnete, ebene erste Anlagefläche (41) vorgesehen ist,
g) wobei die zweite Umlenkung (24) eine als Drehlager ausgebildete Rolle (98f) ist, welche auf der der ersten Anlagefläche (41) gegenüberliegenden Seite der Vorrichtung in einem Abstand von ca. 10 bis 50 cm zur Anlagefläche angeordnet ist.

2. Vorrichtung nach Anspruch 1, **dadurch gekennzeichnet, dass** die zweite Umlenkung (24) in einem Abstand von 10 cm bis 30 cm und besonders bevorzugt in einem Abstand von 15 bis 25 cm zur Anlagefläche (41) angeordnet ist und weiter vorzugsweise eine seitliche Begrenzung der Vorrichtung darstellt.

3. Vorrichtung nach einem oder mehreren der vorstehenden Ansprüche, **dadurch gekennzeichnet, dass** eine quer zur ersten Anlagefläche (41) angeordnete zweite Anlagefläche (99) vorgesehen ist, die vorzugsweise u-förmig ausgebildet ist.

4. Vorrichtung nach dem vorstehenden Anspruch, **dadurch gekennzeichnet, dass** die zweite Anlagefläche (99) derart angeordnet ist, dass deren Mittelebene seitlich versetzt zu mindestens einer Mittelebene einer Umlenkung (18, 24) oder einer Seilführung (100) verläuft.

5. Vorrichtung nach einem oder mehreren der vorstehenden Ansprüche, **dadurch gekennzeichnet, dass** an der Oberseite der Vorrichtung eine ebene Trittfläche (80) ausgebildet ist.

6. Vorrichtung nach einem der vorstehenden Ansprüche, **dadurch gekennzeichnet, dass** die erste Umlenkung (18) und/oder die zweite Umlenkung (24) das Seil (20) um 120° bis 240° umlenken.

7. Vorrichtung nach einem der vorstehenden Ansprüche, **dadurch gekennzeichnet, dass** im Bereich der zweiten Umlenkung (24) ein Führungsglied (26), insbesondere ein Drehlager (22), angeordnet ist, wobei zwischen dem Führungsglied (26) und der zweiten Umlenkung (24) ein Abstand von 5 bis 20 mm, bevorzugt ein Abstand von 10 bis 18 mm und besonders bevorzugt ein Abstand von 12 bis 14 mm vorgesehen ist.

8. Vorrichtung nach einem der vorstehenden Ansprüche, **dadurch gekennzeichnet, dass** die Haltemittel (36) zwei zueinander beabstandete obere Halteelemente (62) mit Durchgangsöffnungen (48a, b, 88a) umfassen, die es ermöglichen, die Vorrichtung in einer durch die Halteelemente gebildeten Öffnung (63) so zu positionieren, dass eine Struktur, insbesondere die Sprosse eines Strommasten (60), an der die Vorrichtung aufgehängt werden soll, zwischen den Halteelementen (62) hindurch verläuft und die Vorrichtung durch Durchführen eines Sicherungselements durch die Durchgangsöffnungen (48a, b) an der Struktur hängend fixierbar ist.

9. Vorrichtung nach Anspruch 8, **dadurch gekennzeichnet, dass** die Haltemittel (36) mindestens eine Durchgangsöffnung (88a) mit einer ebenen Auflagefläche (90a) für das Festspannen der Vorrichtung mit Hilfe eines Gurtes (92) umfassen, wobei die ebene Auflagefläche (90a) der Öffnung vorzugsweise parallel zu der zweiten Anlagefläche (99) angeordnet ist.

10. Vorrichtung nach einem der vorstehenden Ansprüche, **dadurch gekennzeichnet, dass** die Haltemittel (36) ein magnetisches Element (42) umfassen, das derart dimensioniert und positioniert ist, dass die Vorrichtung allein mit Hilfe des magnetischen Elements (42) an einer metallischen Struktur, insbesondere an einem Strommasten (60), positionierbar ist.

11. Vorrichtung nach einem der vorstehenden Ansprüche, **dadurch gekennzeichnet, dass** eine dritte Umlenkung und optional eine vierte Umlenkung vorgesehen sind, wobei die zweite Umlenkung (24), die dritte Umlenkung und optional die vierte Umlenkung vorzugsweise senkrecht übereinander angeordnet sind.

12. Vorrichtung nach einem oder mehreren der vorstehenden Ansprüche, **dadurch gekennzeichnet, dass** mindestens eine Umlenkung (18, 24) aus einem thermoplastischen Material, bevorzugt aus einem Polyoxymethylen (POM) und besonders bevorzugt aus einem Homopolymer, hergestellt ist.

13. Vorrichtung nach einem der vorstehenden Ansprüche, **dadurch gekennzeichnet, dass** a) die Haltemittel (36) zwei voneinander beabstandete, untere Halteelemente (38a, 38b) umfassen, die vorzugsweise an den Außenseiten der Vorrichtung und besonders bevorzugt beweglich angeordnet sind und/oder b) die Haltemittel (36) mindestens eine Durchgangsöffnung (88c, 88d) mit einer ebenen Auflagefläche für das Festspannen der Vorrichtung mit Hilfe eines Gurtes (94c, 94d) umfassen, wobei die ebene Auflagefläche der Öffnung vorzugsweise parallel zu der ersten Anlagefläche (41) angeordnet ist.

14. Verfahren zur Aufstiegssicherung mit einer Vorrichtung nach einem der vorstehenden Ansprüche, **gekennzeichnet durch** folgende Verfahrensschritte:
a) Anlegen der Vorrichtung mit der ersten Anlagefläche (41) an einer ebenen Anlagefläche des zu besteigenden Objekts (60),
b) Fixierung der Vorrichtung mit oberen Haltemitteln (36) und/oder mit unteren Haltemitteln (36), insbesondere mit Hilfe von ein oder mehreren Gurten (92, 94c, 94d), an einer zu besteigenden Struktur,
c) nur sofern die erfindungsgemäße Vorrichtung noch nicht mit einem Seil (20) vorkonfektioniert ist: Führen des losen Seilendes eines Seils (20) von unten in die Vorrichtung, um die erste Umlenkung (18) herum und um die zweite Umlenkung (24) herum in Aufstiegsrichtung,
d) Verbinden des durch die Vorrichtung geführten Seils (20) mit einer aufzusteigenden Person,
e) Mitführen des Seils (20) auf dem Aufstieg durch die aufsteigende Person und
f) regelmäßiges Einhängen des Seils (20) in Sicherheitsstrukturen, die im Falle eines Absturzes eine Umlenkung des Seils (20) ermöglichen und das Gewicht der aufsteigenden Person sicher tragen, insbesondere Einhängen des Seils (20) in Sicherheitssteigsprossen (64).

## Claims

1. Device for protecting an ascending person during ascent and including a non-fixed rope (20) that is to be carried by the ascending person, comprising;
a) retaining means (36) for fixing the device to a fixed anchoring point in a predetermined position,
b) a structural configuration which enables the introduction of the rope (20) into the device, fixed in the predetermined position, from below,
c) at least one first redirecting component (18) by which the rope (20) to be introduced into the device can be guided through the device on a curved path,
d) a mechanism that causes automatic locking off of the rope (20) when the speed of movement of the rope (20) through the device exceeds a predetermined limit value, wherein
e) at least one second redirecting component (24) is provided by which the rope (20) emerging from the device can be guided out of the device in the direction of ascent, and wherein
f) a laterally arranged flat first bearing surface (41) is provided,
g) wherein the second redirecting component (24) is a roller (98f) configured as a pivot bearing which is arranged on the side of the device opposite the first bearing surface (41) at a distance of approximately 10 to 50 cm to the bearing surface.

2. Device according to claim 1, **characterized in that** the second redirecting component (24) is arranged at a distance of approximately 10 cm to 30 cm and particularly preferably at a distance of 15 to 25 cm to the bearing surface (41), and further preferably defines a lateral boundary of the device.

3. Device according to one or several of the preceding claims, **characterized in that** a second bearing surface (99) arranged transversely to the first bearing surface (41) is provided, which second bearing surface is preferably of U-shaped configuration

4. Device according to the preceding claim, **characterized in that** the second bearing surface (99) is arranged such that its centre plane extends in a laterally offset manner with respect to at least one centre plane of a redirecting component (18, 24) or a rope guide (100).

5. Device according to one or several of the preceding claims, **characterized in that**, on the upper side of the device, a flat tread (80) is configured.

6. Device according to one of the preceding claims, **characterized in that** at least one of: the first redirecting component (18) or the second redirecting component (24) deflects the rope (20) by 120° to 240°.

7. Device according to one of the preceding claims, **characterized in that**, in the region of the second redirecting component (24), a guide member (26), in particular a pivot bearing (22), is arranged, wherein between the guide member (26) and the second redirecting component (24), a distance of 5 to 20 mm, preferably a distance of 10 to 18 mm and particularly preferably a distance of 12 to 14 mm is provided.

8. Device according to one of the preceding claims, **characterized in that** the retaining means (36) comprise two upper retaining elements (62) spaced apart from each other and including passage holes (48a, b, 88a), which allow the device to be positioned in an opening (63) defined by the retaining elements such that a structure, in particular the rung of an electricity pole (60), on which the device is to be suspended extends between the retaining elements (62), and the device is adapted to be fixed to the structure in a suspended manner by guiding a safety element through the passage holes (48a, b).

9. Device according to claim 8, **characterized in that** the retaining means (36) comprise at least one passage hole (88a) having a flat contact surface (90a) for fixedly tensioning the device with the aid of a belt (92), wherein the flat contact surface (90a) of the hole is preferably arranged in parallel to the second bearing surface (99).

10. Device according to one of the preceding claims, **characterized in that** the retaining means (36) comprise a magnetic element (42) which is dimensioned and positioned such that the device is adapted to be positioned on a metallic structure, in particular on an electricity pole (60), solely with the aid of the magnetic element (42).

11. Device according to one of the preceding claims, **characterized in that** a third redirecting component and optionally a fourth redirecting component, wherein the second redirecting component (24), the third redirecting component and optionally the fourth redirecting component are vertically arranged one above the other.

12. Device according to one or several of the preceding claims, **characterized in that** at least one of the redirecting components (18, 24) is made from a thermoplastic material, preferably from a polyoxymethylene (POM) and particularly preferably from a homopolymer.

13. Device according to one of the preceding claims, **characterized in that** a) the retaining means (36) comprise two lower retaining elements (38a, 38b) spaced apart from each other, which are preferably arranged on the outer faces of the device and are particularly preferably moveably arranged and/or b) the retaining means (36) comprise at least one passage hole (88c, 88d) with a flat contact surface for fixedly tensioning the device with the aid of a belt (94c, 94d), wherein the flat contact surface of the hole is preferably arranged in parallel to the first bearing surface (41).

14. Method for protection during ascent using a device according to one of the preceding claims, **characterized by** the following method steps:
a) placing the first bearing surface (41) of the device on a flat bearing surface of the object to be climbed (60),
b) fixing the device using upper retaining means (36) and/or lower retaining means (36), in particular with the aid of one or several belts (92, 94c, 94d) to a structure to be climbed,
c) only where the device according to the invention is not provided with a preinstalled rope (20): guiding the loose rope end of the rope (20) in the direction of ascent into the device from below, around the first redirecting component (18) and around the second redirecting component (24),
d) connecting the rope (20) guided through the device with a person about to ascend,
e) carrying the rope (20) by the ascending person during the ascent, and
f) clipping the rope (20) at regular intervals into safety structures which allow the rope (20) to be deflected in case of a fall and safely carry the weight of the ascending person, in particular clipping the rope (20) into safety climbing rungs (64).

## Revendications

1. Dispositif de sécurisation d'ascension d'une personne effectuant une ascension avec un câble lâche (20) à porter par la personne effectuant une ascension, comportant
a) des moyens de retenue (36) pour fixer le dispositif à un point d'ancrage fixe dans une position prédéterminée,
b) un agencement constructif qui permet d'insérer le câble (20) par le bas dans le dispositif fixé dans la position prédéterminée,
c) au moins un premier dispositif de renvoi (18), au moyen duquel le câble (20) inséré dans le dispositif peut être guidé sur un chemin incurvé à travers le dispositif,
d) un mécanisme, qui provoque le blocage automatique du câble (20) lorsque la vitesse du câble (20) à travers le dispositif dépasse une limite prédéterminée,
e) au moins un second dispositif de renvoi (24) prévu, au moyen duquel le câble (20) sortant du dispositif peut être guidé hors du dispositif dans la direction d'ascension, et dans lequel
f) une première surface de contact plane (41) disposée latéralement est prévue,
g) dans lequel le second dispositif de renvoi (24) est un galet réalisé sous la forme d'un palier de pivotement (98f), qui est disposé sur le côté opposé à la première surface de contact (41) du dispositif, à une distance d'environ 10 à 50 cm de la surface de contact.

2. Dispositif selon la revendication 1, **caractérisé en ce que** le second dispositif de renvoi (24) est agencé à une distance de 10 cm à 30 cm, et de manière particulièrement préférée à une distance de 15 à 25 cm de la surface de contact (41), et constitue de manière plus préférée une limite latérale du dispositif.

3. Dispositif selon une ou plusieurs des revendications précédentes, **caractérisé en ce qu'**une seconde surface de contact (99) agencée transversalement par rapport à la première surface de contact (41) est formé, qui est de préférence en forme de u.

4. Dispositif selon la revendication précédente, **caractérisé en ce que** la seconde surface de contact (99) est agencée de sorte que son plan médian s'étend en étant décalé latéralement par rapport à au moins un plan central d'un dispositif de renvoi (18, 24) ou d'un guide-câble (100).

5. Dispositif selon une ou plusieurs des revendications précédentes, **caractérisé en ce qu'**une surface de circulation plane (80) est formée sur le côté supérieur du dispositif.

6. Dispositif selon l'une des revendications précédentes, **caractérisé en ce que** le premier dispositif de renvoi (18) et/ou le second dispositif de renvoi (24) renvoient le câble (20) de 120° à 240°.

7. Dispositif selon l'une des revendications précédentes, **caractérisé en ce qu'**un élément de guidage (26), en particulier un palier de pivotement (22), est disposé dans la zone du second dispositif de renvoi (24), dans lequel entre l'élément de guidage (26) et le second dispositif de renvoi (24), une distance de 5 à 20 mm, de préférence une distance de 10 à 18 mm et de manière particulièrement préférée une distance de 12 à 14 mm est prévue.

8. Dispositif selon l'une des revendications précédentes, **caractérisé en ce que** les moyens de retenue (36) comprennent deux éléments de retenue supérieurs (62) espacés l'un de l'autre avec des ouvertures traversantes (48a, b, 88a), qui permettent ainsi de positionner le dispositif dans une ouverture (63) réalisée à travers les éléments de retenue de sorte qu'une structure, en particulier les barreaux d'un poteau électrique (60) sur lequel le dispositif doit être suspendu, passe entre les éléments de retenue (62), et le dispositif peut être fixé suspendu à la structure en faisant passer un élément de sécurisation à travers les ouvertures traversantes (48a, b).

9. Dispositif selon la revendication 8, **caractérisé en ce que** les moyens de retenue (36) comportent au moins une ouverture traversante (88a) avec une surface de support plane (90a) pour serrer le dispositif au moyen d'une sangle (92), dans lequel la surface de support plane (90a) de l'ouverture est de préférence agencée parallèlement à la seconde surface de contact (99).

10. Dispositif selon l'une des revendications précédentes, **caractérisé en ce que** les moyens de retenue (36) comprennent un élément magnétique (42), qui est dimensionné et positionné de sorte que le dispositif peut être positionné sur une structure métallique, notamment un poteau électrique (60), uniquement à l'aide de l'élément magnétique (42).

11. Dispositif selon l'une des revendications précédentes, **caractérisé en ce qu'**un troisième dispositif de renvoi et éventuellement un quatrième dispositif de renvoi sont prévus, dans lequel le deuxième dispositif de renvoi (24), le troisième dispositif de renvoi et facultativement le quatrième dispositif de renvoi sont agencés de préférence perpendiculairement les uns au-dessus des autres.

12. Dispositif selon une ou plusieurs des revendications précédentes, **caractérisé en ce qu'**au moins un dispositif de renvoi (18, 24) est fabriqué en un matériau thermoplastique, de préférence en polyoxyméthylène (POM), et de manière plus préférée en un homopolymère.

13. Dispositif selon l'une des revendications précédentes, **caractérisé en ce que** :
a) les moyens de retenue (36) comprennent deux éléments de retenue inférieurs espacés l'un de l'autre (38a, 38b), qui sont de préférence agencés sur les côtés extérieurs du dispositif et de manière plus préférée de manière mobile, et/ou b) les moyens de retenue (36) comprennent au moins une ouverture traversante (88c, 88d) avec une surface de support plane pour le serrage du dispositif au moyen d'une sangle (94c, 94d), dans lequel la surface de support plane de l'ouverture est agencée de préférence parallèle à la première surface de contact (41).

14. Procédé de sécurisation d'ascension avec un dispositif selon l'une des revendications précédentes, **caractérisé par** les étapes de procédé suivantes consistant à :
a) mettre en contact le dispositif avec la première surface de contact (41) sur une surface de contact plane de l'objet (60) devant faire l'objet d'une ascension,
b) fixer le dispositif avec des moyens de retenue supérieurs (36) et/ou avec des moyens de retenue inférieurs (36), en particulier au moyen d'une ou plusieurs sangles (92, 94c, 94d), sur une structure devant faire l'objet d'une ascension,
c) seulement si le dispositif selon l'invention n'a pas encore été préfabriqué avec un câble (20) : guider l'extrémité libre d'un câble (20) par le bas dans le dispositif, autour du premier dispositif de renvoi (18) et autour du second dispositif de renvoi (24) dans la direction d'ascension,
d) relier le câble guidé à travers le dispositif (20) à une personne devant effectuer une ascension,
e) transporte le câble (20) durant l'ascension via la personne effectuant l'ascension, et
f) accrocher le câble (20) de manière régulière dans des structures de sécurisation qui, en cas de chute, permettent un renvoi du câble (20) et supportent en toute sécurité le poids de la personne effectuant l'ascension, en particulier accrocher le câble (20) dans des échelons d'ascension de sécurité (64).
